# NOUVEAU FASCICULE DE BREVET EUROPEEN

(11) **EP 1 747 124 B2**
(45) Date de publication et mention de la décision concernant l'opposition: **26.09.2012**
(45) Mention de la délivrance du brevet: 29.10.2008
(21) Numéro de dépôt: 05769513.2
(22) Date de dépôt: 04.05.2005
(51) Int. Cl.: B60R 21/34

(54) **SUPPORT DE BUTEE D'UN CAPOT AVANT D'UN VEHICULE AUTOMOBILE**
HALTESTÜTZE FÜR DIE MOTORHAUBE EINES KRAFTFAHRZEUGES
STOP SUPPORT FOR THE FRONT HOOD OF A MOTOR VEHICLE

(30) Priorité: 12.05.2004 EP 04291217
(43) Date de publication de la demande: 31.01.2007
(73) Titulaire: COMPAGNIE PLASTIC OMNIUM, 69007 Lyon (FR)
(72) Inventeur: ANDRE, Gérald, F-01500 Ambérieu en Bugey (FR); CARRIER, Pascal, F-69003 Lyon (FR); LEPOUTRE, Alexis, F-38460 Cremieu (FR)
(74) Mandataire: Remy, Vincent Noel Paul
(86) Numéro de dépôt international: PCT/FR2005/001134
(87) Numéro de publication internationale: WO 2005/120907

(56) Documents cités:
- EP-A- 1 104 726
- EP-A- 1 277 630
- WO-A-03/082654
- DE-A- 10 123 479
- DE-A1- 10 014 606
- DE-U1- 8 019 864
- DE-U1- 20 318 864
- FR-A- 2 836 879
- PATENT ABSTRACTS OF JAPAN vol. 0090, no. 07 (M-350), 12 janvier 1985 (1985-01-12) -& JP 59 156872 A (NISSAN JIDOSHA KK), 6 septembre 1984 (1984-09-06)
- VDI-GESELLSCHAFT KUNSTOFFTECHNIK: 'Kunstoffeinsatz im Automobilbau', partie 1984 VDI-VERLAG, DÜSSELDORF, ISBN 3-18-40413-4 pages 65 - 83

## Description

La présente invention concerne une pièce munie d'un support de butée d'un capot avant d'un véhicule automobile, le capot avant s'appuyant, en position fermée, sur la butée.

Une telle pièce est connu de DE 20318864 U selon le préambule de la revendication 1. Le document WO 03082654 montre également une telle pièce.

A la suite d'un choc piéton à l'avant d'un véhicule automobile, la tête ou le fémur du piéton peut entrer en collision à grande vitesse avec le capot avant suivant une trajectoire sensiblement verticale. Le capot tourne autour d'un axe vertical par l'intermédiaire de charnières disposées à l'arrière du capot, et il s'écrase verticalement à l'avant.

Or, le capot s'appuie à l'avant, en position fermée, sur au moins une butée disposée généralement sur une traverse avant du véhicule automobile, cette traverse étant très rigide par construction.

Les blessures occasionnées par une telle collision sont d'autant plus importantes que la tête subit une accélération négative élevée au cours de sa décélération jusqu'à vitesse nulle.

Or, cette accélération négative dépend de l'effort de réaction exercé par le capot et de la course disponible pour la décélération avant que la tête ne soit arrêtée par une pièce très rigide du véhicule automobile, comme la traverse.

Afin de protéger le piéton, il est souhaitable que l'effort de réaction exercé par le capot sur la tête soit limité, tout en permettant l'arrêt de la tête sur la course disponible pour la décélération.

Lorsque les butées sont elles-aussi rigides, l'effort de réaction sur la tête du piéton est très important. En effet, la seule déformation du capot lors de la collision ne suffit pas à limiter suffisamment l'effort de réaction.

Ainsi, pour limiter l'effort de réaction, il est connu d'utiliser une butée munie d'un ressort et permettant au capot de s'enfoncer lors de la collision.

Mais de telles butées sont complexes et particulièrement coûteuses.

L'invention a pour but de fournir un dispositif simple et économique permettant de préserver la tête d'un piéton sans recourir à de telles butées à ressort.

A cet effet, l'invention a pour objet une pièce de véhicule automobile selon la revendication 1.

Ainsi, grâce à l'invention, l'obtention d'une course de décélération et la limitation de l'effort de réaction sont obtenues de manière simple en choisissant un support dont la forme et le type de matériau le constituant lui confèrent l'aptitude à céder. De plus, il est très facile de fixer des butées classiques à un tel support.

De plus, du fait que le support est issu de moulage avec la pièce du véhicule automobile, on réduit la chaîne de cotes entre le capot et la pièce de carrosserie et on améliore donc la gestion des jeux entre le capot et les pièces de carrosserie disposées autour du capot.

Une pièce de véhicule automobile selon l'invention peut en outre comporter l'une ou plusieurs des caractéristiques suivantes :
- le support de butée est apte à céder en se déformant plastiquement ;
- la déformation du support de butée est programmée de manière à maintenir un effort de réaction acceptable, c'est-à-dire voisin du seuil prédéterminé, grâce à une conformation géométrique particulière ;
- le support de butée est apte à céder en se rompant.

L'invention sera mieux comprise à la lecture de la description qui va suivre, donnée uniquement à titre d'exemple et faite en se référant aux dessins dans lesquels :
- la figure 1a est une vue en perspective d'un avant de véhicule automobile illustrant une traverse de face avant technique munie d'un support pour butée selon un premier mode de réalisation de l'invention ;
- la figure 1b est une vue en section de l'avant de véhicule automobile de la figure 1a, dans le sens de la longueur du véhicule ;
- la figure 2a est une vue en perspective d'un avant de véhicule automobile illustrant un enjoliveur de face avant technique muni d'un support pour butée selon un deuxième mode de réalisation de l'invention ;
- la figure 2b est une vue en section de l'avant de véhicule automobile de la figure 2a, dans le sens de la longueur du véhicule ;
- la figure 3a est une vue en perspective d'un avant de véhicule automobile illustrant une armature de pare-chocs munie d'un support pour butée selon un troisième mode de réalisation de l'invention ;
- la figure 3b est une vue en section de l'avant de véhicule automobile de la figure 3a, dans le sens de la longueur du véhicule ;
- la figure 4a est une vue en perspective d'un avant de véhicule automobile illustrant une peau de pare-chocs avant muni d'un support pour butée selon un quatrième mode de réalisation de l'invention ; et
- la figure 4b est une vue en section de l'avant de véhicule automobile de la figure 4a, dans le sens de la longueur du véhicule ;

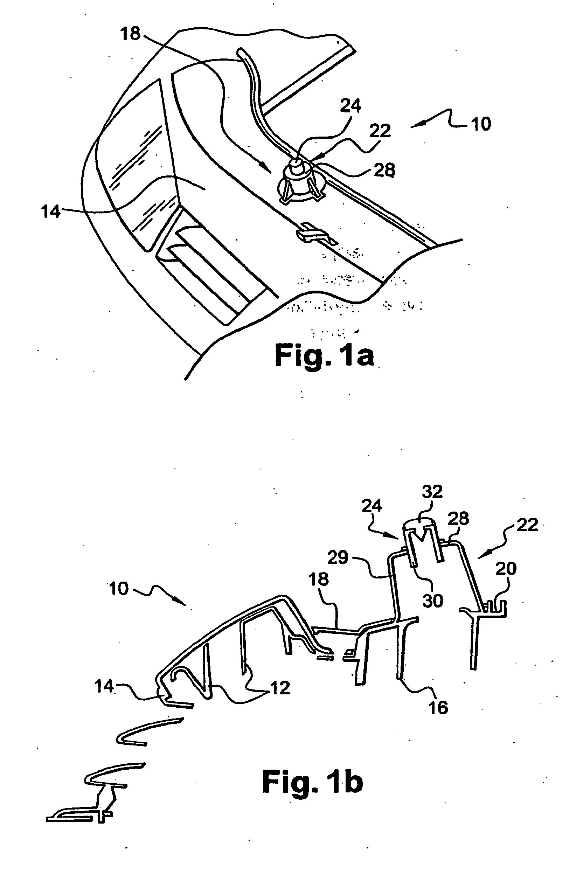

On a représenté sur les figures 1a et 1b un avant de véhicule automobile désigné par la référence générale 10. L'avant 10 du véhicule automobile comprend une armature de pare-chocs 12 et une peau de pare-chocs 14. La peau de pare-chocs 14 est supportée par l'armature de pare-chocs 12 et recouvre cette dernière.

L'avant 10 du véhicule automobile comprend en outre une face avant technique dont une traverse 16, agencée dans la largeur du véhicule, est représentée sur la figure 1b. L'armature de pare-chocs 12 et la peau de pare-chocs 14 s'étendent jusqu'à la traverse 16.

La traverse 16 est en outre recouverte en partie par un enjoliveur de traverse 18 délimité dans la longueur du véhicule d'un côté par la peau de pare-chocs 14 et de l'autre côté par une nervure 20 de la traverse 16.

La traverse 16 comporte un support 22 d'une butée 24 d'un capot avant (non représenté) du véhicule automobile. La traverse 16 et le support 22 sont en matière plastique.

Le support 22 est issu de la même opération de moulage que la traverse 16. Ainsi, le support 22 est créé par formage d'une paroi de la traverse 16 en tronc de cône, dont une partie plane supérieure 28 liée à des parties latérales 29 supporte la butée 24. Cette dernière comporte généralement un corps cylindrique 30 traversant la partie plane 28 et un tampon 32 obstruant une extrémité supérieure du cylindre 30, et sur lequel s'appuie le capot avant en position fermée.

L'enjoliveur de traverse 18, recouvrant la traverse 16, comporte une ouverture circulaire à travers laquelle le support 22 fait saillie.

Lorsque le capot subit un effort sensiblement vertical supérieur à un seuil prédéterminé, correspondant à l'effort résultant d'un choc piéton, le support 22 est apte à céder en se déformant plastiquement.

Plus précisément, l'enfoncement de la butée 24 sous l'effet de l'effort vertical provoque la déformation de la partie plane supérieure 28, qui s'affaisse alors à proximité de la butée 24, et des parties latérales 29 flambant en conséquence.

La déformation s'effectue tout d'abord de manière élastique, dans laquelle une faible déformation entraîne une forte augmentation de l'effort de réaction. Cette déformation élastiques rend le support 22 apte à supporter sans déformation permanente les sollicitations du type appui fessier ou de claquages répétés du capot. Puis, la déformation s'effectue de manière plastique, dans laquelle l'augmentation de l'effort de réaction en fonction de la déformation est très faible : on dit alors que le support 22 cède.

Par le choix d'un matériau et d'une conformation géométrique particulière du support, la déformation est programmée de manière à maintenir un effort de réaction, sensiblement égal au seuil prédéterminé.

En variante, le support 22 peut céder en se rompant partiellement au lieu de se déformer plastiquement..

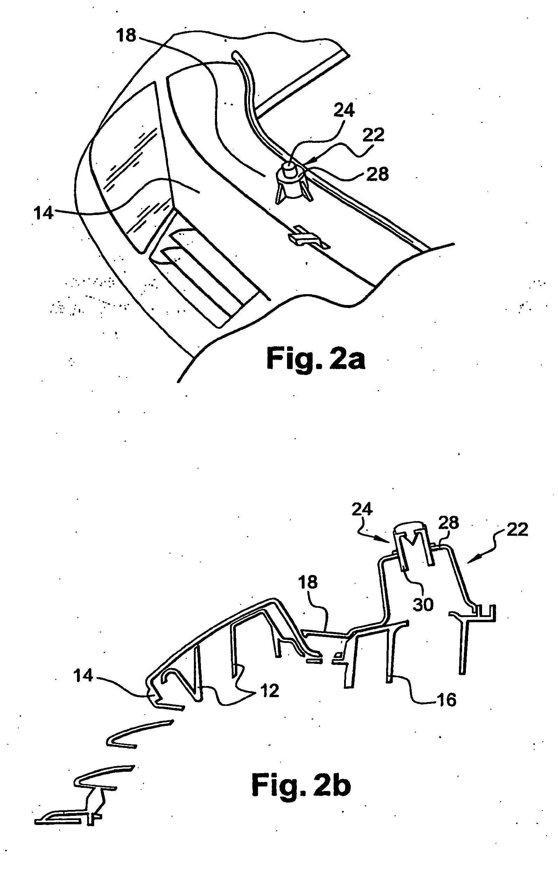

On a représenté sur les figures 2a et 2b un deuxième mode de réalisation de l'invention. Les pièces analogues à celles décrites dans le premier mode de réalisation des figures 1 a et 1 b portent les mêmes références.

Dans ce mode de réalisation, l'armature de pare-chocs 12 et la peau de pare-chocs 14 sont identiques à celles du premier mode de réalisation.

Le support 22 est cette fois issu de moulage avec l'enjoliveur de traverse 18, recouvrant la traverse 16. Ainsi, le support 22 est créé par formage d'une paroi de l'enjoliveur de traverse 18 en tronc de cône, dont la partie plane supérieure 28 supporte la butée 24. Cette dernière est identique à celle décrite dans le premier mode de réalisation.

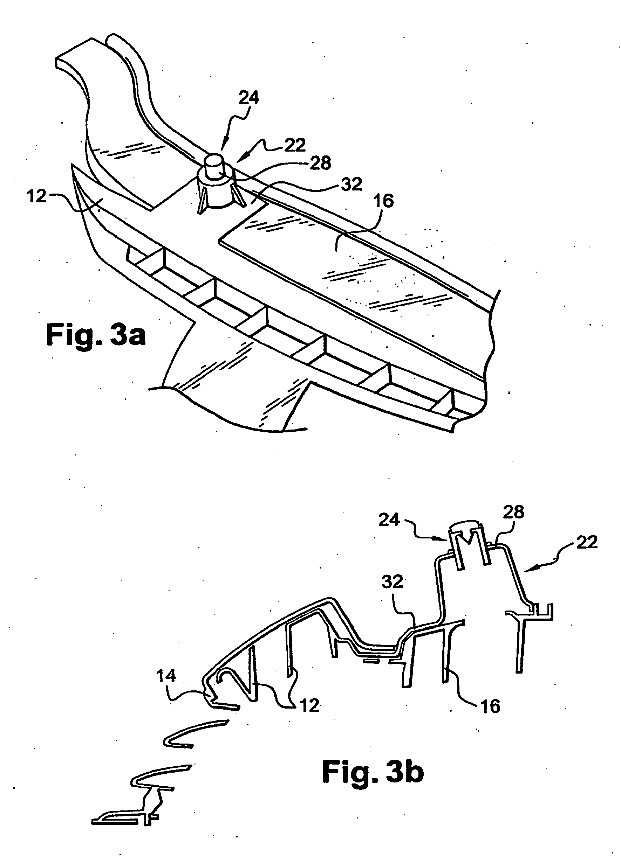

On a représenté sur les figures 3a et 3b un troisième mode de réalisation de l'invention. Les pièces analogues à celles décrites dans les précédents modes de réalisation portent les mêmes références.

Dans ce troisième mode de réalisation, l'armature de pare-chocs 12 comporte une paroi 32 recouvrant la traverse 16. Le support 22 est créé par formage de la paroi 32 de la traverse 16 en tronc de cône, dont la partie plane supérieure 28 supporte la butée 24.

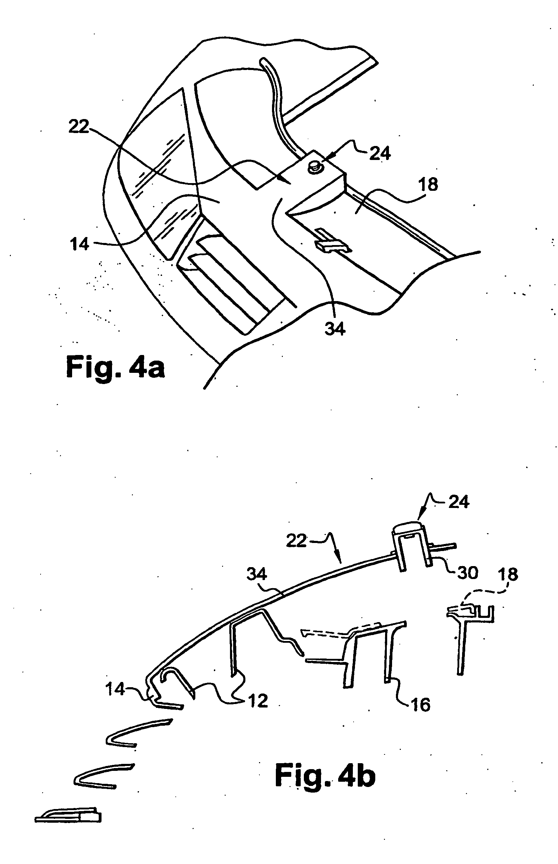

On a représenté sur les figures 4a et 4b un quatrième mode de réalisation de l'invention. Les pièces analogues à celles décrites dans les précédents modes de réalisation portent les mêmes références.

Dans ce quatrième mode de réalisation, la peau de pare-chocs 14 comporte une extension 34 s'étendant au dessus de la traverse 16 et de son enjoliveur 18. L'extension 34 est issue de moulage avec la peau de pare-chocs 14, dans la continuité d'une surface extérieure, c'est-à-dire visible, de la peau de pare-chocs 14.

L'extension 34 a une forme rectangulaire plane et s'étend à distance de la traverse 16, sensiblement parallèlement à une paroi supérieure de cette traverse 16.

L'extension 34 comporte une extrémité reliée à la peau de pare-chocs et une autre extrémité opposée à la précédente. L'extension 34 est reliée à la traverse 16 au moyen de deux bords latéraux (non représentés), sensiblement verticaux, disposés entre les deux extrémités. Les bords latéraux sont également issu de même moulage que la peau de pare-chocs 14.

L'ensemble de l'extension 34 et des bords latéraux.forme le support 22 de butée 24. cette butée 24 est identique à celle décrite dans les modes de réalisation précédents, à la seule différence que le cylindre 30 traverse l'extension 34 dans ce quatrième mode réalisation.

On notera que l'invention ne se limite pas aux modes de réalisation décrits mais peut recevoir toute modification acceptable entrant dans le cadre fixé par les revendications.

## Revendications

1. Pièce (16 ; 18 ; 12 ; 14) de véhicule automobile en matière plastique, munie d'un support (22) de butée (24), pour un véhicule automobile comprenant un capot avant s'appuyant, en position fermée, sur la butée (24), le support de butée (22) est apte à céder lorsque le capot subit un effort sensiblement vertical supérieur à un seuil prédéterminé, correspondant à l'effort résultant d'un choc piéton, ledit support étant issu de moulage avec la pièce (16 ; 18 ; 12 ; 14) du véhicule automobile, **caractérisée en ce que** la pièce (16 ; 18 ; 12 ; 14) de véhicule automobile forme l'une des pièces suivantes :
- une traverse (16) de face avant technique ;
- un enjoliveur (18) de traverse (16) de face avant technique ;
- une armature (12) de pare-chocs ;
- une peau (14) de pare-chocs.

2. Pièce (16 ; 18 ; 12 ; 14) de véhicule automobile selon la revendication 1, **caractérisée en ce que** le support (22) de butée (24) est apte à céder en se déformant plastiquement.

3. Pièce (16 ; 18 ; 12 ; 14) de véhicule automobile selon la revendication 2, dans laquelle la déformation du support (22) de butée (24) est programmée de manière à maintenir un effort de réaction acceptable, c'est-à-dire voisin du seuil prédéterminé, grâce à une conformation géométrique particulière.

4. Pièce (16 ; 18 ; 12 ; 14) de véhicule automobile selon l'une quelconque des revendications 1 à 3, **caractérisé en ce que** le support (22) de butée (24) est apte à céder en se rompant.

## Claims

1. A part (16 ; 18 ; 12 ; 14) made of plastic material for a motor vehicle, comprising a support (22) for an abutment (24) of a motor vehicle having a front hood that, in the closed position, bears against the abutment (24), the support (22) being suitable for giving way when the hood is subjected to a substantially vertical force greater than a predetermined threshold corresponding to the force resulting from an impact with a pedestrian, said support being integrally molded with the part (16 ; 18 ; 12 ; 14) of the motor vehicle, **characterized in that** the part (16 ; 18 ; 12 ; 14) for a motor vehicle is constituting one a the following parts :
- a front panel cross-member (16) ;
- a front panel cross-member cover (18) ;
- a bumper strength member (12) ;
- a bumper skin (14).

2. A part (16 ; 18 ; 12 ; 14) for a motor vehicle according to claim 1, **characterized in that** the abutment support (22) is suitable for giving way by deforming plastically.

3. A part (16 ; 18 ; 12 ; 14) for a motor vehicle according to claim 2, in which the deformation of the abutment support is programmed in such a manner as to maintain an acceptable reaction force, i.e. close to the predetermined threshold, by having a particular geometrical shape.

4. A part (16 ; 18 ; 12 ; 14) for a motor vehicle according to any one of claims 1 to 3, **characterized in that** the abutment support is suitable for giving way by breaking.

## Patentansprüche

1. Teil (16; 18; 12; 14) eines Kraftfahrzeugs aus Kunststoff, ausgestattet mit einer Stütze (22) mit Anschlag (24), für ein Kraftfahrzeug umfassend eine Motorhaube, die sich, in geschlossener Stellung, an dem Anschlag (24) abstützt, wobei die Stütze mit Anschlag (22) nachgeben kann, wenn die Haube einer im Wesentlichen vertikalen Kraft oberhalb einer definierten Schwelle ausgesetzt wird, die der Kraft resultierend aus einem Fußgängeraufprall entspricht, wobei die Stütze aus dem Formen mit dem Teil (16; 18; 12; 14) des Kraftfahrzeugs entsteht,
**dadurch gekennzeichnet, dass**
das Teil (16; 18; 12; 14) des Kraftfahrzeugs eines der folgenden Teile bildet:
- einen Querträger (16) eines technischen Vorderteils;
- eine Blende (18) eines Querträgers (16) eines technischen Vorderteils;
- ein Gerüst (12) einer Stoßstange;
- eine Haut (14) einer Stoßstange.

2. Teil (16; 18; 12; 14) eines Kraftfahrzeugs nach Anspruch 1, **dadurch gekennzeichnet, dass** die Stütze (22) mit Anschlag (24) unter plastischer Verformung nachgeben kann.

3. Teil (16; 18; 12; 14) eines Kraftfahrzeugs nach Anspruch 2, wobei die Verformung der Stütze (22) mit Anschlag (24) so ausgelegt ist, dass eine akzeptable Reaktionskraft, das heißt nahe der definierten Schwelle, durch eine besondere geometrische Gestaltung erzielt wird.

4. Teil (16; 18; 12; 14) eines Kraftfahrzeugs nach einem der Ansprüche 1 bis 3, **dadurch gekennzeichnet, dass** die Stütze (22) mit Anschlag (24) unter Brechen nachgeben kann.
